# EUROPEAN PATENT APPLICATION

(11) **EP 1 865 169 A2**
(43) Date of publication of application: **12.12.2007**
(21) Application number: 07108767.0
(22) Date of filing: 23.05.2007
(51) Int. Cl.: F02B 37/16, F01N 3/30, F01N 3/023

(54) **Internal combustion engine and method**

(30) Priority: 08.06.2006 US 449227
(71) Applicant: Deere & Company, Moline, IL 61265-8098 (US)
(72) Inventor: Winsor, Richard, Waterloo, IA 50701 (US)
(74) Representative: Löser, Iris

(57) **Abstract**

An internal combustion engine (10) includes at least on intake manifold (18, 24), at least one exhaust manifold (20, 26), and a plurality of combustion cylinders (14) for receiving a near stoichiometric fuel and air mixture from the at least one intake manifold (18, 24). A turbocharger (28), including a turbine (30) and a compressor (32), is in communication with at least one exhaust manifold (20, 26). The compressor (32) has a high pressure side in communication with at least one intake manifold (18, 24). A particulate filter (40) is in communication with the turbine (30) and has an inlet. A combustion air duct (44) is in communication with the high pressure side of the compressor (32) and the particulate filter inlet.

## Description

The present invention relates to internal combustion engines, and, more particularly, to a method and apparatus for filtering particulates from an exhaust stream in such an internal combustion engine.

A diesel engine operates under an air follows fuel principle. This generally means that a predetermined amount of fuel is injected into the combustion cylinders and the amount of air that mixes with the fuel in the combustion cylinders is controlled. For example, in a turbocharged diesel engine with a variable geometry turbine (VGT), the adjustable elements in the turbine (e.g., vane position, valves, etc.) are controlled to adjust the amount of air mixing with the fuel in the combustion cylinders. Typically there is an overabundance of air in the exhausted gas products.

In order to meet future particulate emission standards for internal combustion (IC) engines, in particular diesel engines, manufacturers of diesel engines are using particulate filters (also referred to as particulate traps). Such particulate filters are typically placed downstream of the turbocharger turbine and remove solid particulate matter before it exits the exhaust system to the ambient environment. After a particulate filter collects particulates for a period of time, increasing the exhaust temperature to a suitable level cleans the filter (also known as regenerating) since the oxygen in the exhaust burns the accumulated carbon in the filter. Using typical fuel to air mixtures, the excess amount of air left over after the combustion process is sufficient to ensure enough oxygen in the exhaust gases for regeneration of the particulate filter.

It is also known to operate diesel engines at or near a stoichiometric fuel to air mixture ratio, in which the oxygen required for combustion is nearly or all used up in the combustion process. Since it is difficult to reach an exact fuel to air ratio for perfect combustion, this will simply be referred to as "near stoichiometric" combustion. When utilizing a stoichiometric fuel to air mixture, the amount of oxygen left over is not sufficient for regeneration of the particulate filter.

What is needed in the art is a diesel engine which uses a particulate filter to remove solid particulate matter from the exhaust emissions, and which may effectively be regenerated even when operating under near stoichiometric conditions.

It is therefore an object of the present invention to provide a internal combustion engine or a method of operating an internal combustion engine respectively meeting this need.

This object is met according to the invention by the teaching of claim 1 or 10, while features developing the solution in an advantageous way are set forth in the further claims.

The invention comprises, in one form thereof, an internal combustion engine including at least one intake manifold, at least one exhaust manifold, and a plurality of combustion cylinders for receiving a near stoichiometric fuel and air mixture from the at least one intake manifold. A turbocharger, including a turbine and a compressor, is in communication with at least one exhaust manifold. The compressor has a high pressure side in communication with at least one intake manifold. A particulate filter is in communication with the turbine and has an inlet. A combustion air duct is in communication with the high pressure side of the compressor and the particulate filter inlet.

The invention comprises, in another form thereof, an internal combustion engine including a first set of combustion cylinders, a second set of combustion cylinders, and a turbocharger having a turbine and a compressor. The turbine is in communication with the first set of combustion cylinders and/or second set of combustion cylinders. The compressor has a high pressure side in communication with the first set of combustion cylinders and/or second set of combustion cylinders. At least one particulate filter is in communication with the turbine. A combustion air duct is in communication with the high pressure side of the compressor at one end, and in communication with and coupled between the turbine and the at least one particulate filter at another end.

The invention comprises, in yet another form thereof, a method of operating an internal combustion engine with a plurality of combustion cylinders, including the steps of combusting a near stoichiometric fuel and air mixture in a plurality of combustion cylinders; exhausting the fuel and air mixture from the plurality of combustion cylinders; filtering particulates from the exhausted fuel and air mixture using at least one particulate filter, each particulate filter in communication with a turbine of a turbocharger; providing charged combustion air to the at least one particulate filter from a high pressure side of a compressor of the turbocharger; and regenerating the at least one particulate filter using the charged combustion air.

Numerous other advantages and features of the present invention will be become readily apparent from the following detailed description of the invention and the embodiments thereof, from the claims and from the accompanying drawings wherein
- Fig. 1: is a schematic view of an embodiment of an internal combustion engine of the present invention; and
- Fig. 2: is a schematic view of the combustion air duct shown in Fig. 1, with optional controllable valves.

Referring now to the drawings, there is shown an embodiment of an IC engine 10 of the present invention, which generally includes a block 12 defining a plurality of combustion cylinders 14. In the embodiment shown, IC engine 10 is a diesel engine including six combustion cylinders 14, but may include a different number of combustion cylinders, such as eight, ten, twelve, etc. The plurality of combustion cylinders 14 includes a first set of combustion cylinders 16 which are in communication with an intake manifold 18 and an exhaust manifold 20; and a second set of combustion cylinders 22 in communication with an intake manifold 24 and an exhaust manifold 26.

Exhaust manifolds 20 and 26 each have an exhaust outlet which is in fluid communication with a turbocharger 28 including a turbine 30 which rotatably drives a compressor 32. The spent exhaust gas exits turbine 30 and is exhausted to a 3- way catalyst 34. Although catalyst 34 is shown as a 3-way catalyst in the embodiment shown, it is possible to use other types of catalysts, depending upon the application.

Compressor 32 receives combustion air from the ambient environment, as indicated by line 36, and provides compressed combustion air to intake manifolds 18 and 24. The compressed combustion air is heated as a result of the work during the compression operation, and is cooled by an aftercooler 38 located downstream from compressor 32.

A particulate filter 40 (PF), configured as a dual particulate filter in the embodiment shown, filters particulates from the exhaust stream from 3-way catalyst 34, which in turn receives exhaust from turbine 30.

According to an aspect of the present invention, charged combustion air from the high pressure side of compressor 32 is selectively provided to the inlet side of particulate filter 40 to allow regeneration of particulate filter 40 under near stoichiometric conditions. The phrase "high pressure side" is not intended to refer to a particular side of the compressor, as it will be appreciated that the compressor can be configured with many different shapes and configurations. Rather, the phrase high pressure side refers to any structural aspect of the compressor associated with the flow path of charge air after compressive work has been carried out on the lower pressure ambient air received at the inlet to compressor 32. It will be appreciated that the charged combustion air can be utilized anywhere from the high pressure side of compressor 32 up to and including intake manifolds 18 and 24, since this entire flow path is in direct communication with the high pressure side of compressor 32.

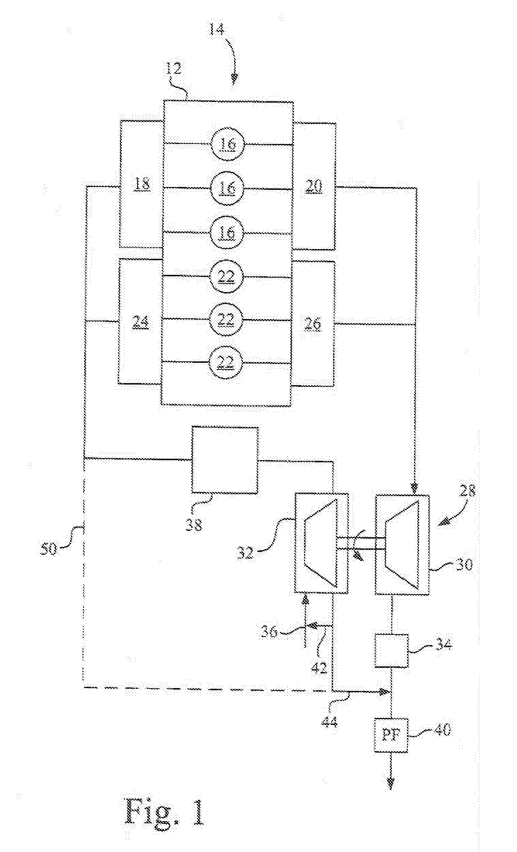

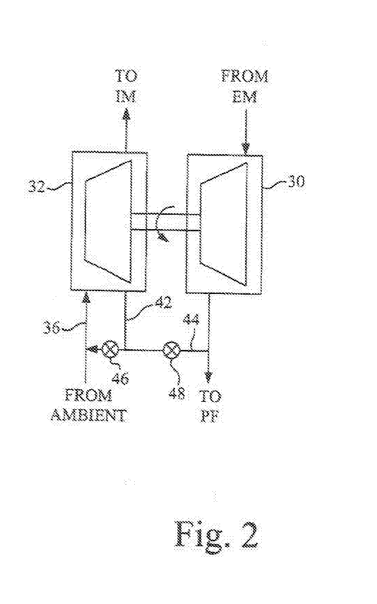

In the embodiment shown in Figs. 1 and 2, compressor 32 includes a recirculation passageway 42 leading from the high pressure side to the inlet of compressor 32. Recirculation passageway 42 is shown for simplicity sake as being an external conduit to the housing surrounding the compressor wheel of compressor 32, but can also be an integral part of the housing surrounding the compressor wheel. The operation of a recirculation passageway in a compressor of a turbocharger is known and will not be described in further detail hereinafter.

A combustion air duct 44 is coupled with recirculation passageway 42 at one end thereof, and is coupled with an inlet side of particulate filter 40 at another end thereof. Combustion air duct 44 provides combustion air to particulate filter 40 for effective regeneration of particulate filter 40. An optional valve 46 and/or 48 shown in Fig. 2 can be controllably operated (for example, using the engine controller) to selectively provide a flow of charge air to the inlet of compressor 32 and/or the inlet of particulate filter 40. It is preferable to utilize combustion air from recirculation passageway 42, rather than some other location on the high pressure side of compressor 32. Since air is typically already bled from the high pressure side of compressor 32 through recirculation passageway 42, then the work output of compressor 32 is not substantially further reduced by redirecting this same air to the inlet side of particulate filter 40. Bleeding air from another downstream location on the high pressure side of compressor 32 is possible, but could decrease the work efficiency of compressor 32.

During operation of IC engine 10, particulate filter 40 filters particulates originating from combustion cylinders 16 and 22. The exhaust gases filtered by particulate filter 40 may contain little oxygen since the combustion may occur at near stoichiometric conditions. As a result, for regeneration of particulate filter 40, it is necessary to add additional air to the exhaust gases for burning the carbon particles. This additional charge air is transported from the high pressure side of compressor 32 from any convenient coupling point, such as from recirculation passageway 42. Particulate filter 40 is then effectively regenerated using the additional charge air.

It will be appreciated, as indicated above, that the charge air transported to the inlet of particulate filter 40 for regeneration need not necessarily be coupled at the inlet with recirculation passageway 42. For example, the charge air can be drawn from the conventional outlet of the compressor, the fluid line leading to aftercooler 38, the fluid line between aftercooler 38 and intake manifolds 18 and 24 (as shown by dashed lines 50 in Fig. 1), or directly from intake manifolds 18 and/or 24.

In the embodiment shown, particulate filter 40 is coupled with a single turbocharger 28. However, particulate filter 40 could be configured as a dual particulate filter with two filter elements, and it is also possible to couple each particulate filter element with a separate turbocharger. Further, in the embodiment shown, turbocharger 28 is assumed to be configured as a variable geometry turbocharger (VGT), but may also be configured as a fixed geometry turbocharger. Additionally, it may be possible in some circumstances to position particulate filter 40 on the upstream side of turbine 30, between exhaust manifolds 20, 26 and turbine 30, rather than on the downstream side of turbine 30.

Having described the preferred embodiment, it will become apparent that various modifications can be made without departing from the scope of the invention as defined in the accompanying claims.

## Claims

1. An internal combustion engine (10), comprising: at least one intake manifold 18, 24); at least one exhaust manifold (20, 26); a plurality of combustion cylinders (14) for receiving a near stoichiometric fuel and air mixture from said at least one intake manifold (18, 24); a turbocharger (28) including a turbine (30) and a compressor (32), said turbine (30) in communication with at least one said exhaust manifold (20, 26), said compressor (32) having a high pressure side in communication with at least one said intake manifold (18, 24); **characterized by** at least one particulate filter (40) in communication with said turbine (30) and having an inlet; and a combustion air duct (44) in communication with said high pressure side of said compressor (32) and said particulate filter inlet.

2. The internal combustion engine according to claim 1, **characterized in that** said turbine (30) includes an outlet, said particulate filter inlet is in communication with said turbine outlet, and said combustion air duct (44) is coupled between said turbine outlet and said particulate filter inlet.

3. The internal combustion engine according to claim 1 or 2, **characterized by** a catalyst (34) coupled between said turbine outlet and said particulate filter inlet, said combustion air duct (44) being coupled between said catalyst (34) and said particulate filter inlet.

4. The internal combustion engine according to one or several of the previous claims, **characterized in that** said compressor (32) includes an inlet, and a recirculation passageway (42) in communication between said high pressure side and said compressor inlet, said combustion air duct (44) in communication with said recirculation passageway (44), preferably including a valve (46, 48) in said recirculation passageway (42).

5. The internal combustion engine according to one or several of the previous claims, **characterized by** a valve (46, 48) in said combustion air duct (42).

6. The internal combustion engine according to one or several of the previous claims, **characterized in that** said combustion air duct (44) is coupled with said at least one intake manifold (18, 24).

7. The internal combustion engine according to one or several of the previous claims, **characterized in that** said internal combustion engine (10) comprises a diesel engine.

8. The internal combustion engine according to one or several of the previous claims, **characterized in that** the at least one particulate filter (40) comprises a dual particulate filter.

9. The internal combustion engine according to one or several of the previous claims, **characterized by** a first set of combustion cylinders (14) and a second set of combustion cylinder (14); said turbine (30) in communication with at least one of said first set of combustion cylinders (14) and said second set of combustion cylinders (14), said compressor (32) having a high pressure side in communication with at least one of said first set of combustion cylinders (14) and said second set of combustion cylinders (14) ; the at lea st one particulate filter in communication with said turbine (30); and the combustion air duct (44) in communication with said high pressure side of said compressor (32) at one end, and in communication with and coupled between said turbine (30) and said at least one particulate filter (40) at an other end.

10. A method of operating an internal combustion engine including a plurality of combustion cylinders (14), comprising the steps of combusting a near stoichiometric fuel and air mixture in a plurality of combustion cylinders (14); exhausting said fuel and air mixture from said plurality of combustion cylinders (14); filtering particulates from said exhausted fuel and air mixture using at least one particulate filter (40), each said particulate filter (40) in communication with a turbine (30) of a turbocharger (28); **characterized by** the steps of providing charged combustion air to said at least one particulate filter (40) from a high pressure side of a compressor (32) of said turbocharger (28); and regenerating said at least one particulate filter (40) using said charged combustion air.

11. The method of operating an internal combustion engine according to claim 10, wherein said compressor (32) includes a recirculation passageway (42), and said step of providing charged combustion air comprises providing charged combustion air from said recirculation passageway (42).

12. The method of operating an internal combustion engine according to claim 10 or 1 , wherein said step of providing charged combustion air comprises providing charged combustion air from a downstream side of said compressor (32).

13. The method of operating an internal combustion engine according to one or several of the claims 10 to 12, wherein said at least one particulate filter (40) is coupled with a downstream side of said turbine (30).
